# EUROPÄISCHE PATENTSCHRIFT

(11) **EP 1 600 658 B1**
(45) Veröffentlichungstag und Bekanntmachung des Hinweises auf die Patenterteilung: **10.01.2007**
(21) Anmeldenummer: 05009076.0
(22) Anmeldetag: 26.04.2005
(51) Int. Cl.: F16F 1/38, B60G 11/12

(54) **Gelenklager, insbesondere Federaugenlager**
Pivot bearing, especially bearing for a leave spring
Palier de pivotement, spécialement palier d'oeillet de ressort à lame

(30) Priorität: 25.05.2004 DE 102004025607
(43) Veröffentlichungstag der Anmeldung: 30.11.2005
(73) Patentinhaber: Jörn GmbH, 71336 Waiblingen (DE)
(72) Erfinder: Zawadzki, Bernd, 71409 Schwaikheim (DE); Mursinsky, Jörg, 71364 Winnenden (DE); Keppel, Manfred, 7540 Laussing (AT); Mekina, Markus, 4400 Steyr (AT); Kissinger, Alfred, 80797 München (DE); Just, Robert, 85256 Vierkirchen (DE); Jakobs, Oliver, 85386 Eching (DE); Werner, Martin, 83624 Otterfing (DE); Grosskopf, Rainer, 85368 Moosburg (DE)
(74) Vertreter: Neubauer, Hans-Jürgen

(56) Entgegenhaltungen:
- EP-A- 0 493 731
- EP-A- 0 955 482
- EP-A- 1 013 961
- EP-A- 1 293 365
- DE-A1- 19 856 694

## Beschreibung

Die Erfindung betrifft ein Gelenklager, insbesondere ein Federaugenlager nach dem Oberbegriff des Anspruchs 1.

Ein bekanntes gattungsgemäßes Gelenklager als Federaugenlager (DE 198 56 694 C2) besteht aus einer zylindrischen Gelenkbuchse, die ein radial inneres, stabiles, dickwandiges Stahlrohr, eine zylindrische Gummischicht und ein äußeres Rohrteil als Kunststoffrohr umfasst. Ein Befestigungsbolzen, der im Stahlrohr aufgenommen ist, bildet ein Bauteil eines ersten Lagerteils. Weiter besteht das Federaugenlager aus einem Federauge einer Blattfeder als zweitem Lagerteil, in das die zylindrische, im Herstellzustand im Durchmesser größere Gelenkbuchse unter radialer Vorspannung eingepresst ist.

Bei diesem Federaugenlager ist die Gummischicht festhaftend auf der Innenfläche des Kunststoffrohrs aufvulkanisiert, so dass das Kunststoffrohr und die Gummischicht ein Buchsenteil bilden. Die Gelenkbuchse und das Stahlrohr sind in das Federauge eingepresst, wobei das vor dem Einpressen im Außendurchmesser gegenüber dem Innendurchmesser des Aufnahmeauges größere umfangsseitig geschlossene Kunststoffrohr über eine plastische Verformung durch Fließen und Setzen eine spaltlose, flächige und für alle Betriebsbedingungen verdrehfeste Anlageverbindung zum umgebenden Aufnahmeauge bildet. Durch eine radiale und axiale Gummiverdrängung in der Gummischicht beim Einpressen wird gegenüber dem inneren Stahlrohr eine Vorspannung in der Gummischicht aufgebaut dergestalt, dass die Gummischicht auf dem inneren Stahlrohr durch Reibschluss bei normal vorgesehenen Betriebsbedingungen bis zu einem bestimmten Losbrechmoment drehfest gehalten ist und Lagerbewegungen molekular in der Gummischicht aufgenommen werden. Bei einer großen Drehbelastung über dem Losbrechmoment rutscht die Gummischicht auf dem Stahlrohr zum Abbau dieser großen Drehbelastung in eine weniger belastete, jedoch dort wieder drehfest gehaltene Position durch.

Auf beiden Endseiten des inneren Stahlrohrs sind mit einem Presssitz Stützringe aufgepresst, an denen sich die Gummischicht im eingepressten Zustand bei axialen Lagerbelastungen abstützt. Damit wird einerseits eine gewünschte schnell in Axialrichtung ansteigende Federkennung des Lagers erreicht und andererseits das Buchsenteil bestehend aus dem Kunststoffrohr mit der festhaftend anvulkanisierten Gummischicht an einer Axialbewegung zwischen der Gummischicht und dem Stahlrohr und damit an einem axialen Auswandern aus der Längsmitte gehindert. Eine axiale Wanderbewegung zwischen dem Kunststoffrohr und der Gummischicht ist hier nicht möglich, da diese beiden Teile festhaftend durch Vulkanisation verbunden sind.

Für eine funktionsstabile Ausbildung der bei starken Belastungen gleitfähigen Anlagefläche zwischen der Gummischicht und dem inneren Stahlrohr ist es erforderlich, ein dünnes Blechrohr unmittelbar im Bereich der Innenfläche der Gummischicht vorzusehen, auf dem auf der Innenseite ein Gummifilm angebracht ist, der durch schmale Längsausnehmungen durchgehend bis zum Blechrohr in Segmente aufgeteilt ist.

Das vorstehende Federaugenlager ist insbesondere durch den Vulkanisiervorgang für die Gummischicht auf der Innenseite des umfangsseitig geschlossenen Kunststoffrohrs und für das Blechrohr und den darauf angebrachten Gummifilm relativ kostenintensiv.

Aufgabe der Erfindung ist es, ein gattungsgemäßes Lager so zu modifizieren und weiterzubilden, dass bei guter Lagerfunktion günstigere Herstell- und Montagekosten erreicht werden.

Diese Aufgabe wird mit den kennzeichnenden Merkmalen des Anspruchs 1 gelöst.

Gemäß Anspruch 1 ist die Gummischicht auf der Außenfläche des Stahlrohrs festhaftend angebracht, vorzugsweise aufvulkanisiert, wobei das Stahlrohr und die Gummischicht ein Buchsenteil bilden. Im Vergleich zum Stand der Technik ergibt sich dadurch ein einfacherer und kostengünstigerer Vulkanisiervorgang. Zudem wird im Gegensatz zum Stand der Technik ein Kunststoffrohr verwendet, welches einen über seine Länge durchgehenden Längsschlitz mit einander gegenüberliegenden Schlitzrändern aufweist. Der Außendurchmesser des Kunststoffrohrs ist bei zusammengeführten und aneinanderliegenden Schlitzrändern, d. h. bei geschlossenem Längsschlitz etwas größer als der Innendurchmesser des Aufnahmeauges. Das Kunststoffrohr weist einen in einer Lagerquerebene angeordneten und zur Rohrinnenseite gerichteten Stützsteg und entsprechend die Gummischicht an ihrer Außenseite eine dem Stützsteg zugeordnete Eingriffrille auf.

Für die Montage des Kunststoffrohrs auf das Buchsenteil bzw. über die Gummischicht wird das Kunststoffrohr am Längsschlitz auseinandergezogen und elastisch aufgeweitet, so dass es von der Seite her auf das Buchsenteil zur Komplettierung der Gelenkbuchse aufsteckbar ist. Dabei greift der Stützsteg in die Eingriffrille ein. Ein axiales Aufschieben des Kunststoffrohrs auf die Gummischicht wäre durch den nach innen abstehenden Stützsteg behindert.

Die Gelenkbuchse mit dem aufgesteckten Kunststoffrohr wird anschließend zur Komplettierung des Gelenklagers in das Aufnahmeauge eingepresst. Dadurch wird einerseits durch eine radiale und axiale Gummiverdrängung in der Gummischicht eine in dieser und auf das äußere Kunststoffrohr wirkende, radial nach außen gerichtete Vorspannung aufgebaut und der Längsschlitz des Kunststoffrohrs geschlossen. Zudem liegen bei entsprechender Breitendimensionierung des Längsschlitzes dessen Schlitzränder unter Vorspannung aneinander, was zusätzlich zu der von der vorgespannten Gummischicht gelieferten radialen Vorspannung zu einer das Kunststoffrohr aufweitenden Kraft führt und somit die radiale Vorspannung des Kunststoffrohrs und damit dessen Anpresskraft gegen die Aufnahmeaugeninnenfläche erhöht. Diese sowohl von der Gummischicht als auch vom Kunststoffrohr selbst ausgehenden radialen Vorspannungen wirken dergestalt, dass das Kunststoffrohr im Aufnahmeauge bei allen Lagerbelastungen und Einsatzbedingungen mit einer verdrehfesten Anlageverbindung gehalten ist. Dagegen ist die Vorspannung in der Gummischicht zum Kunststoffrohr hin nur so groß, dass die Gummischicht im Kunststoffrohr durch Reibschluss bei normal vorgesehenen Betriebsbedingungen des Gelenklagers bis zu einem bestimmten Losbrechmoment drehfest gehalten ist, wobei Lagerbewegungen molekular in der Gummischicht aufgenommen werden. Bei einer größeren Drehbelastung über dem Losbrechmoment, rutscht jedoch die Gummischicht relativ zum Kunststoffrohr zum Abbau dieser großen Drehbelastung in eine weniger belastete, jedoch dort wieder drehfest gehaltene Position durch.

Weiter ist aufgrund der axialen Gummiverdrängung im eingepressten Zustand der in die Eingriffrille eingreifende Stützsteg mit einer beidseitigen Anlageverbindung in der Eingriffrille gehalten. Damit ergibt sich eine Axiallagesicherung für das Kunststoffrohr gegenüber der Gummischicht. Ohne den Stützsteg wäre ein unzulässiges axiales Auswandern des Buchsenteils an der Anlagefläche zwischen Gummischicht und Kunststoffrohr möglich, da dort auch das oben beschriebene Durchrutschen mit einer Verdrehung möglich sein soll.

Vorteilhaft ist das erfindungsgemäße Gelenklager einfach und kostengünstig herstellbar und montierbar, wobei eine erforderliche axiale Lagesicherung der Bauteile, insbesondere durch den Stützsteg am Kunststoffteil und die zugeordnete Eingriffrille, an der Gummischicht gewährleistet ist.

Die Möglichkeit eines Durchrutschens bei großen Drehbelastungen stellt einen vorteilhaften Überlastungsschutz dar und ist zudem besonders vorteilhaft bei der Montage von Blattfedern verwendbar: die Blattfedern müssen am Fahrzeug nicht mehr im betriebsmäßig vorgespannten Zustand montiert werden, da sich die Gelenklager beim Aufstellen des Fahrzeugs auf die Räder mittels Durchrutschen selbsttätig auf eine Nulllage entsprechend der statischen Belastung einstellen. Zudem können im Kunststoffrohr Durchmessertoleranzen, Unrundheiten, etc. des Aufnahmeauges aufgenommen werden.

Zweckmäßig wird in der Gummischicht in der Lagerlängsmitte für eine Vergleichmäßigung der Gummivorspannung in diesem Bereich eine umlaufende Ringnut vorgesehen, welche gemäß Anspruch 2 in einer weiteren Funktion als Eingriffrille für den Stützsteg des Kunststoffrohrs genutzt werden kann.

Für diese vorstehende Funktion einer Vergleichmäßigung der Vorspannung im Lagerlängsmittenbereich sollen im Herstellzustand die Eingriffrillentiefe und die Eingriffrillenbreite relativ groß sein, insbesondere größer als die Steghöhe und die Stegbreite des Stützstegs. Dadurch wäre im Herstellzustand bei einem aufgesteckten Kunststoffrohr die Mittenlage wegen der gegenüber der Stegbreite größeren Eingriffrillenbreite nicht mehr eindeutig definiert. Um hier eine vorbestimmte axiallagerichtige Vormontage des Kunststoffrohrs auf der Gummischicht zu ermöglichen, sind in der Eingriffrille radial nach außen in den Stegbereich vorstehende Justiernasen angeformt, mit jeweils einer der Stegbreite angepassten Justierkerbe. Diese wenigen Justiernasen beeinflussen nicht merklich die Funktion der insgesamt über den Umfang mit größerer Breite verlaufenden Eingriffrille zur Vergleichmäßigung der Gummivorspannung im Lagerlängsmittenbereich.

Gemäß Anspruch 4 sollen der Stützsteg und die zugeordnete Eingriffrille umlaufend ausgebildet sein, wodurch bei großen Drehbelastungen über dem Losbrechmoment ein weiterer Drehbereich für eine gleitende Einstellung zur Verfügung steht. Je nach den Gegebenheiten kann in einer alternativen Ausführung nach Anspruch 5 der Stützsteg und/oder die zugeordnete Eingriffrille nur in Umfangsteilbereichen ausgebildet sein, wobei beispielsweise geringere oder keine verdrehbare Gleiteinstellbereiche vorgebbar sind.

Vorteilhaft weist nach Anspruch 6 der Stützsteg gegenüberliegend zum Längsschlitz eine Unterbrechung auf, so dass dort ein scharnierartiger Bereich an der Kunststoffrohrwand geschaffen ist, an dem das Kunststoffrohr zur Vergrößerung seines Längsschlitzes beim Aufsteckvorgang auf die Gummischicht aufklappbar ist. Nach Anspruch 7 soll diese Unterbrechung des Stützstegs V-förmig ausgebildet sein. Dadurch soll sichergestellt werden, dass sich in dem Bereich der Unterbrechung des Stützstegs beim Einpressen der Gelenkbuchse in das Aufnahmeauge kein Gummi einklemmt und in einem ungünstigen Fall abgeschert wird. Aus dem gleichen Grund wird auch vorgeschlagen, dass die Stützstegenden bei aneinanderliegenden Schlitzrändern eine V-Form bilden.

Für eine gegenseitige Lagesicherung der aneinanderliegenden Schlitzränder im eingepressten Zustand können diese nach Anspruch 8 eine gegenseitige Eingriffstruktur aufweisen. Ebenso können die Anlageflächenbereiche der Schlitzränder zur Abstützung großer gegenseitiger Anlagekräfte eine im Vergleich zur Wandstärke des übrigen Kunststoffrohrs größere Materialstärke aufweisen.

Da beim erfindungsgemäßen Gelenklager die Gummischicht auf das innere Stahlrohr aufvulkanisiert ist, besteht hier nicht die Gefahr, dass die Gummischicht gegenüber dem Stahlrohr axial auswandern kann, so dass hier im Gegensatz zum Stand der Technik grundsätzlich für diesen Zweck keine Stützringe an den beiden Endseiten des Stahlrohrs erforderlich sind. Nach Anspruch 9 können jedoch auch beim erfindungsgemäßen Gelenklager insbesondere zur Erhöhung der axialen Steifigkeit des Gelenklagers für eine Stabilisierung des Lenkverhaltens und für eine bessere Achsführung bei Federaugenlagern Stützringe verwendet werden. Diese Stützringe werden an beiden Endseiten des Stahlrohrs, vorzugsweise im noch nicht in das Aufnahmeauge eingepressten Zustand der Gelenkbuchse aufgesteckt mit jeweils einem axialen Freiraum zur jeweils benachbarten Stirnseite der Gummischicht. Nach dem Einpressen der Gelenkbuchse in das Aufnahmeauge ist dann der Gummi der Gummischicht in die beidseitigen Freiräume so verdrängt, dass eine Anlage und axiale Abstützung zwischen Gummischicht und Stützringen erfolgt.

In einer vorteilhaften Weiterbildung nach Anspruch 10 ist die radiale Materialstärke der Stützringe etwas geringer als die Gummischichtdicke und das Kunststoffrohr übergreift mit axialen stirnseitigen Überständen und radialen Spalten die Stützringe. Geringe radiale und kardanische Lagerbewegungen werden im Rahmen der radialen Spalte molekular in der Gummischicht aufgenommen. Bei entsprechenden größeren Bewegungen legt sich dagegen das Kunststoffrohr mit seinen seitlichen Überständen als Überlastungsschutz und Anschlag an den Stützringumfängen an.

In einer dazu alternativen Ausführungsform nach Anspruch 11 entspricht die Kunststoffrohrlänge etwa der Gummischichtlänge, so dass ggf. die Stützringe gegen die Innenfläche des Aufnahmeauges wirken. Zweckmäßig verläuft bei dieser Ausführungsform die Kunststoffrohrinnenwand jeweils im axialen Endbereich schräg nach radial innen, so dass sie dort die Gummischicht im eingepressten Zustand einengend übergreift.

Gemäß Anspruch 12 kann das Kunststoffrohr ein glasfaserverstärktes Polyamidrohr sein.

Zur Montage des Gelenklagers kann nach Anspruch 13 das erste Lagerteil weiter zwei beabstandete Halteplatten, insbesondere als Bauteile eines Federgehänges einer Blattfederlagerung eines Nutzfahrzeugs umfassen, zwischen die das innere Stahlrohr mittels des Befestigungsbolzens einer Schraubverbindung verdrehfest eingespannt ist, wobei die axiale Länge des Stahlrohrs größer als die axiale Länge des Aufnahmeauges ist. Damit ist zwischen den Halteplatten genügend Platz für Lagerbewegungen des Aufnahmeauges.

Bei Verwendung des Gelenklagers als Federaugenlager kann gemäß Anspruch 14 das Federauge je nach den Gegebenheiten zylindrisch ausgedreht oder auch unbearbeitet eingesetzt werden. Fertigungstoleranzen werden dabei in gewissen Grenzen im Gelenklager aufgenommen.

Anhand einer Zeichnung wird die Erfindung näher erläutert.

Es zeigen:
- Fig. 1: ein Buchsenteil in axialer Draufsicht mit einem Ausbruch im Bereich einer Eingriffrille,
- Fig. 2: einen Längsschnitt entlang der Linie A-A durch das Buchsenteil nach Fig. 1,
- Fig. 3: einen Längsschnitt entlang der Linie B-B durch das Buchsenteil nach Fig. 1,
- Fig. 4: eine Seitenansicht des Buchsenteils,
- Fig. 5: eine axiale Draufsicht auf ein Kunststoffrohr,
- Fig. 6: einen Längsschnitt entlang der Linie C-C des Kunststoffrohrs nach Fig. 5,
- Fig. 7a, 7b, 7c: drei Varianten in vergrößerter Darstellung des Bereichs D aus Fig. 5,
- Fig. 8: eine alternative Ausführung in vergrößerter Darstellung des Bereichs E aus Fig. 5,
- Fig. 9: eine Gelenkbuchse aus dem Buchsenteil nach den Fig. 1 bis 4 mit aufgestecktem Kunststoffrohr nach den Fig. 5 und 6 sowie mit aufgesteckten Stützringen in einer Seitenansicht mit halbseitigem Längsschnitt,
- Fig. 10: eine axiale Draufsicht auf die Gelenkbuchse nach Fig. 9,
- Fig. 11: eine alternative Ausführungsform der Gelenkbuchse nach Fig. 9, jedoch mit kürzerem Kunststoffrohr,
- Fig. 12: eine axiale Draufsicht auf die Gelenkbuchse nach Fig. 11,
- Fig. 13: ein fertig montiertes Gelenklager als Federaugenlager im Längsschnitt, und
- Fig. 14: eine axiale Draufsicht auf das Federaugenlager nach Fig. 13.

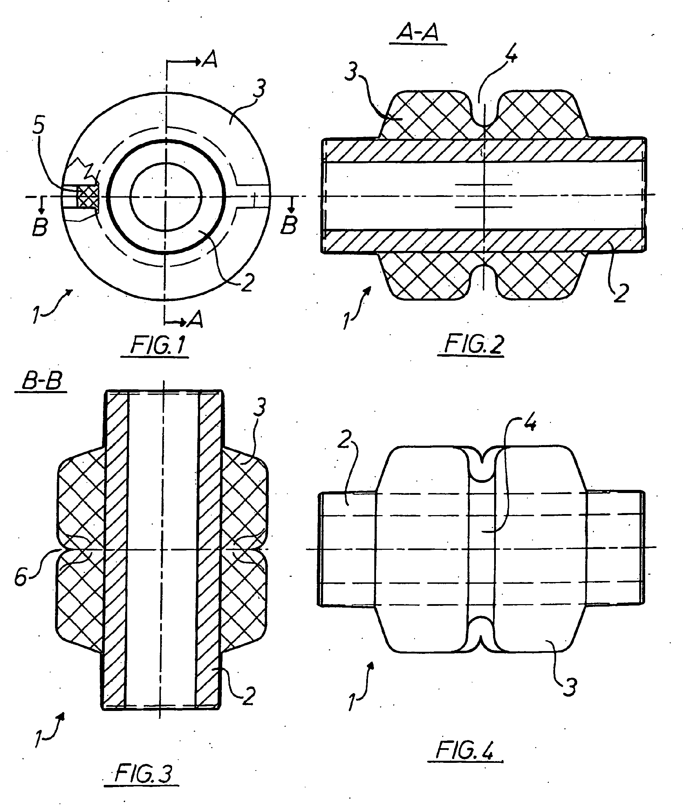

In den Fig. 1 bis 4 ist in unterschiedlichen Ansichten und Schnittdarstellungen ein Buchsenteil 1 dargestellt, welches aus einem stabilen dickwandigen Stahlrohr 2 und einer darauf aufvulkanisierten zylindrischen Gummischicht 3 besteht.

In der Längsmitte des Buchsenteils 1 ist in der Gummischicht eine umlaufende relativ breite und nahezu bis auf das Stahlrohr durchgehende Eingriffrille 4 ausgebildet. In der Eingriffsrille 4 sind an zwei gegenüberliegenden Stellen Erhebungen als Justiernasen 5 ausgebildet, mit jeweiligen Justierkerben 6, welche die Lagerlängsmitte definieren.

Das Stahlrohr 2 überragt mit jeweils einem Endbereich zu beiden Seiten die Längsausdehnung der Gummischicht 3.

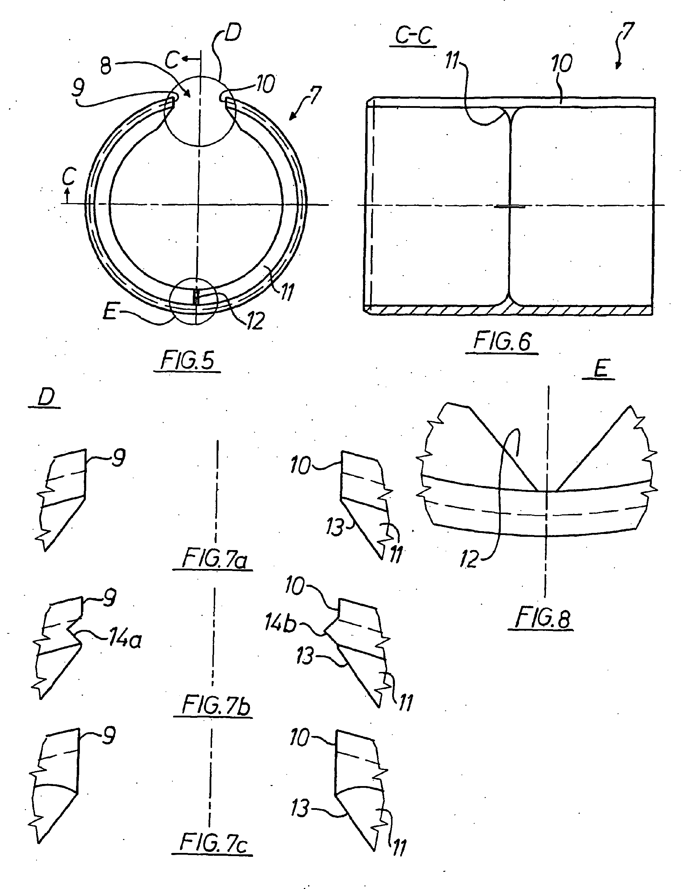

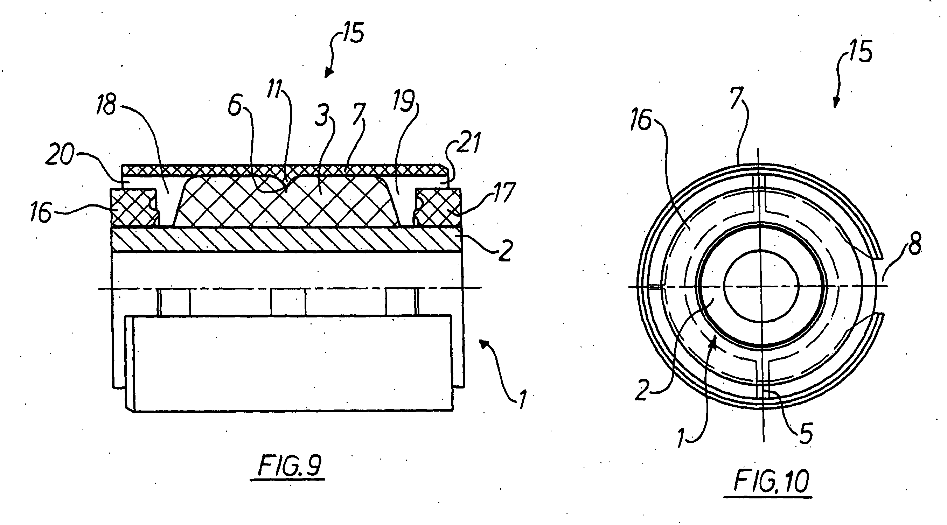

In den Fig. 5, 6, 7 und 8 ist ein Kunststoffrohr 7 in unterschiedlichen Ansichten, Schnitten und mit alternativen Details dargestellt. Das Kunststoffrohr 7 weist einen über seine Länge durchgehenden Längsschlitz 8 auf, mit einander gegenüberliegenden Schlitzrändern 9, 10 sowie einen in einer Rohrmittenquerebene umlaufend angeordneten und zur Rohrinnenseite gerichteten Stützsteg 11. Der Stützsteg 11 weist gegenüberliegend zum Längsschlitz 8 eine Unterbrechung 12 im Bereich E auf, wodurch das Kunststoffrohr 7 dort entlang eines Längsbereichs scharnierartig zur Vergrößerung der Breite des Längsschlitzes 8 aufklappbar ist. Die Unterbrechung 12 kann alternativ gemäß Fig. 8 V-förmig ausgebildet sein.

In den Fig. 7a, 7b, 7c sind Vergrößerungen des Bereichs D aus Fig. 5 dargestellt, mit unterschiedlichen Varianten in der Ausbildung der Schlitzränder 9, 10:

In Fig. 7a sind die Schlitzränder 9, 10 plan so ausgeführt, dass sie bei einer Zusammenführung flächig aneinanderliegend, wobei die Stützstegenden des Stützstegs 11 Schrägen 13 aufweisen dergestalt, dass hier bei geschlossenem Längsschlitz durch die Stützstegenden eine V-Form gebildet ist.

In einer alternativen Ausbildung nach Fig. 7b weisen die Anlageflächen der Schlitzränder 9, 10 eine einander zugeordnete Längseingriffstruktur 14a, 14b auf, welche bei geschlossenem Längsschlitz 8 ineinander greift. Auch hier sind die Stützstegenden mit einer Schräge 13 ausgeführt.

In einer weiteren alternativen Ausführungsform nach Fig. 7c sind die Anlageflächen der Schlitzränder 9, 10 breiter ausgebildet, als die übrige Wandstärke des Kunststoffrohrs 7, wobei auch hier Schrägen 13 an den Stützstegenden vorgesehen sind.

In den Fig. 9 und 10 ist in unterschiedlichen Ansichten und Schnitten eine Gelenkbuchse 15 dargestellt, bestehend aus dem Buchsenteil 1 nach den Fig. 1 bis 4 mit einem aufgesteckten Kunststoffrohr 7 nach den Fig. 5 und 6. Das Kunststoffrohr 7 greift dabei mit dem Stützsteg 11 formschlüssig in die in der Buchsenteillängsmitte angebrachte Justierkerbe 6 ein und ist damit längsmittig justiert.

Zudem ist auf den beiden Endbereichen des Stahlrohrs 2 je ein Stützring 16, 17 aufgesteckt, mit je einem axialen Freiraum 18, 19 zur jeweils benachbarten Stirnseite der Gummischicht 3. Die Stützringe 16, 17 können beispielsweise aus einem stabilen Kunststoff oder aus Metall bestehen und mit einem Presssitz angebracht sein.

Die radiale Materialstärke der Stützringe 16, 17 ist etwas geringer als die Gummischichtdicke und das Kunststoffrohr 7 übergreift mit axialen stirnseitigen Überständen und radialen Spalten 20, 21 die Stützringe 16, 17.

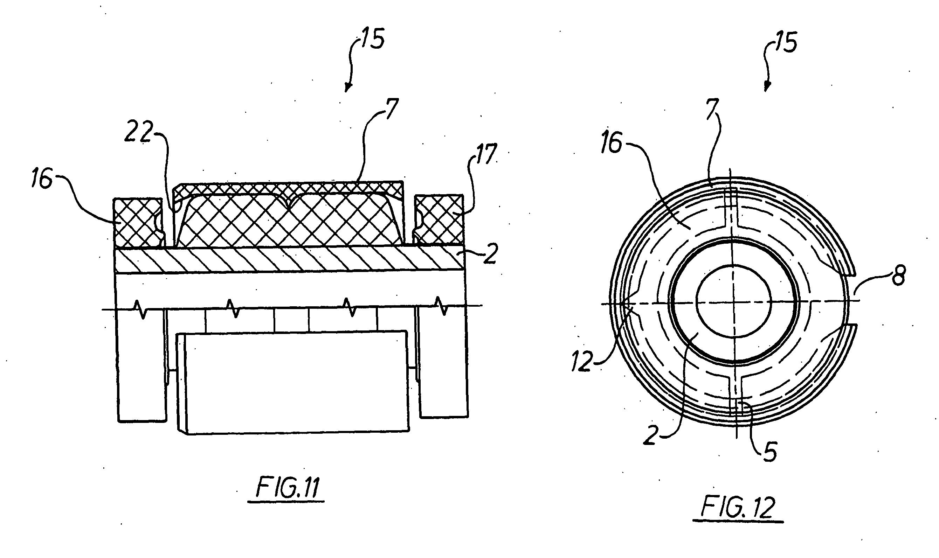

In den Fig. 11 und 12 ist eine ähnliche Ausführungsform einer Gelenkbuchse 15 wie in den Fig. 9 und 10 dargestellt, wobei aber hier die radiale Materialstärke der Stützringe 16, 17 etwa der Gummischichtdicke entspricht und die Rohrlänge des Kunststoffrohrs 7 etwa der Gummischichtlänge entspricht. Die Kunststoffrohrinnenwand ist umlaufend jeweils im Endbereich mit Schrägen 22 nach radial innen geführt. Die Unterbrechung 12 des Stützstegs 11 ist hier V-förmig entsprechend Fig. 8 ausgeführt. Sowohl aus Fig. 10 wie auch aus Fig. 12 ist zu ersehen, dass der Längsschlitz 8 des Kunststoffrohrs 7 beim aufgesteckten Kunststoffrohr 7 etwa um 90° verdreht zu den Justiernasen 5 liegt.

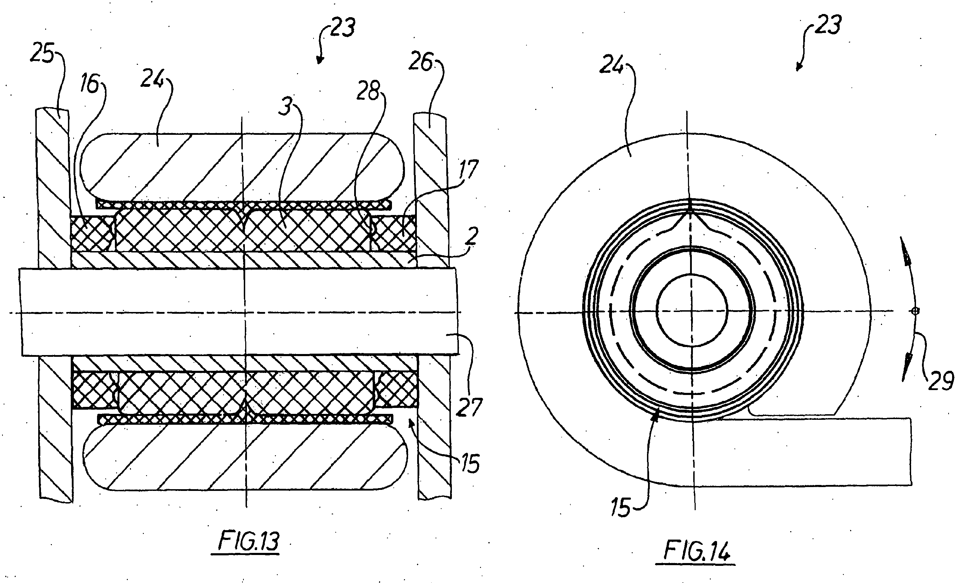

In den Fig. 13 und 14 ist ein fertig montiertes Gelenklager 23 in einem Längsschnitt und in einer axialen Draufsicht dargestellt. Das Gelenklager 23 besteht aus der in ein Aufnahmeauge als Federauge 24 eingepressten Gelenkbuchse 15, wobei das erste Lagerteil aus dem Stahlrohr 2, einem darin aufgenommenen Befestigungsbolzen 27 und zwei Halteplatten 25, 26 besteht(die Halteplatte 25 ist in Fig. 14 weggelassen). Diese Halteplatten 25, 26 sind Bauteile eines Federgehänges einer Blattfederlagerung eines Nutzfahrzeugs, zwischen die das innere Stahlrohr 2 mittels des Befestigungsbolzens 27 einer (nicht dargestellten) Schraubverbindung verdrehfest eingespannt ist. Die axiale Länge des Stahlrohrs 2 ist dabei größer als die axiale Länge des Federauges 24, so dass axiale Relativverschiebungen des Federauges 24 im Rahmen der elastischen Abstützung durch die Gummischicht 3 ohne Kontakt zu den Halteplatten 25, 26 möglich sind.

Durch das Einpressen der Gelenkbuchse 15 in das Federauge 24 wird der Längsschlitz 8 geschlossen dergestalt, dass dessen Schlitzränder 9, 10 unter Vorspannung aneinander liegen. Zudem wird durch eine radiale und axiale Gummiverdrängung in der Gummischicht 3 eine in dieser und auf das äußere Kunststoffrohr 7 wirkende radial nach außen gerichtete Vorspannung aufgebaut. Der Gummi der Gummischicht 3 wird in die beidseitigen Freiräume 18, 19 hineinverdrängt und liegt mit jeweils axialer Abstützung an den Stützringen 16, 17 an. Die Stützringe 16, 17 weisen an den Anlageflächen zur Gummischicht 3 hin Ringnuten 28 auf, in die sich der Gummi der Gummischicht 3 bei axialer Belastung ebenso wie bei einem toleranzmäßig kleinen Federauge 24 hineindrängen lässt.

Die Vorspannung im Kunststoffrohr 7 und der Gummischicht 3 führt dazu, dass das Kunststoffrohr 7 im Federauge 24 immer in einer verdrehfesten Anlageverbindung gehalten ist. Die Vorspannung in der Gummischicht 3 ist dagegen so, dass diese im Kunststoffrohr 7 durch Reibschluss bei normalen Betriebsbedingungen bis zu einem bestimmten Losbrechmoment drehfest gehalten ist. Bei größeren Drehbelastungen (Pfeil 29) rutscht die Gummischicht 3 und damit das erste Lagerteil relativ zum Kunststoffrohr 7 und damit zum zweiten Lagerteil zum Abbau dieser großen Drehbelastung in eine weniger belastete, jedoch dort wieder drehfest gehaltene Position, wo dann Lagerbewegungen wieder molekular in der Gummischicht 3 aufgenommen werden.

Beispielsweise ist aus den Fig. 2 und 6 ersichtlich, dass im Herstellzustand des Buchsenteils und der Gelenkbuchse die Eingriffrillentiefe und die Eingriffrillenbreite größer sind als die Steghöhe und Stegbreite des Stützstegs 11. Im eingepressten Zustand ist, wie aus Fig. 13 ersichtlich, aufgrund der axialen Gummiverdrängung im mittleren Bereich der Gummischicht 3 der Stützsteg 11 umlaufend beidseitig durch den verdrängten Gummi gehalten, so dass sich durch den Stützsteg 11 eine Axiallagesicherung des Kunststoffrohrs 7 gegenüber der Gummischicht 3 ergibt.

## Patentansprüche

1. Gelenklager (23), insbesondere Federaugenlager,
- mit einer zylindrischen Gelenkbuchse (15), die ein radial inneres, stabiles, dickwandiges Stahlrohr (2), eine zylindrische Gummischicht (3) und ein äußeres Rohrteil als Kunststoffrohr (7) umfasst,
- mit einem Befestigungsbolzen, der im Stahlrohr (2) aufgenommen ist und ein Bauteil eines ersten Lagerteils bildet,
- mit einem Aufnahmeauge als zweites Lagerteil, insbesondere einem Federauge (24) einer Blattfeder, in das die zylindrische, im Herstellzustand im Durchmesser größere Gelenkbuchse (15) unter radialer Vorspannung eingepresst ist,
**dadurch gekennzeichnet,**
- **dass** die Gummischicht (3) auf der Außenfläche des Stahlrohrs (2) festhaftend angebracht, vorzugsweise aufvulkanisiert ist, wobei das Stahlrohr (2) und die Gummischicht (3) ein Buchsenteil (1) bilden,
- **dass** das Kunststoffrohr (7) einen über seine Länge durchgehenden Längsschlitz (8) mit einander gegenüberliegenden Schlitzrändern (9, 10) aufweist, wobei im Herstellzustand der Außendurchmesser des Kunststoffrohrs (7) bei aneinanderliegenden Schlitzrändern (9, 10) und geschlossenem Längsschlitz (8) größer als der Innendurchmesser des Aufnahmeauges (24) ist,
- **dass** das Kunststoffrohr (7) wenigstens einen in einer Lagerquerebene angeordneten und zur Rohrinnenseite gerichteten Stützsteg (11) und entsprechend die Gummischicht (3) an ihrer Außenseite eine dem Stützsteg (11) zugeordnete Eingriffrille (4) aufweist,
- **dass** das Kunststoffrohr (7) durch elastisches Aufweiten des Längsschlitzes (8) von der Seite her auf das Buchsenteil (1) zur Komplettierung der Gelenkbuchse (15) aufgesteckt ist, wobei der Stützsteg (11) in die Eingriffrille (4) eingreift,
- **dass** die Gelenkbuchse (15) in das Aufnahmeauge (24) eingepresst ist, so dass einerseits durch eine radiale und axiale Gummiverdrängung in der Gummischicht (3) eine in dieser und auf das äußere Kunststoffrohr (7) wirkende, radial nach außen gerichtete Vorspannung aufgebaut ist,
- so dass andererseits der Längsschlitz (8) geschlossen ist und bei entsprechender Breitendimensionierung des Längsschlitzes (8) dessen Schlitzränder (9, 10) unter Vorspannung aneinander liegen, was zusätzlich zu der von der vorgespannten Gummischicht gelieferten radialen Vorspannung die radiale Vorspannung des Kunststoffrohrs (7) und damit dessen Anpresskraft gegen die Aufnahmeaugeninnenfläche erhöht, dergestalt, dass das Kunststoffrohr (7) im Aufnahmeauge (24) mit einer verdrehfesten Anlageverbindung gehalten ist und dass dagegen durch die Vorspannung in der Gummischicht (3) diese im Kunststoffrohr (7) durch Reibschluss bei normal vorgesehenen Betriebsbedingungen bis zu einem bestimmten Losbrechmoment drehfest gehalten ist und Lagerbewegungen molekular in der Gummischicht (3) aufgenommen werden, jedoch bei einer großen Drehbelastung (29) über dem Losbrechmoment die Gummischicht (3) relativ zum Kunststoffrohr (7) zum Abbau dieser großen Drehbelastung in eine weniger belastete, jedoch dort wieder drehfest gehaltene Position durchrutscht, und
- so dass infolge der axialen Gummiverdrängung der in die Eingriffrille (4) eingreifende Stützsteg (11) mit einer beidseitigen Anlageverbindung in der Eingriffrille (4) als Axiallagesicherung für die Gummischicht (3) gegenüber dem Kunststoffrohr (7) gehalten ist.

2. Gelenklager nach Anspruch 1, **dadurch gekennzeichnet, dass** der Stützsteg (11) und damit die zugeordnete Eingriffrille (4) in einer Lagerlängsmitte angeordnet sind.

3. Gelenklager nach Anspruch 1 oder 2, **dadurch gekennzeichnet,**
- **dass** im Herstellzustand die Eingriffrillentiefe und die Eingriffrillenbreite größer sind als die Steghöhe und die Stegbreite, und
- **dass** für eine axiallagerichtige Vormontage des Kunststoffrohrs (7) auf der Gummischicht (3) in der Eingriffrille (4) radial in den Stegbereich vorstehende Justiernasen (5) angeformt sind, mit jeweils der Stegbreite angepasster Justierkerbe (6).

4. Gelenklager nach einem der Ansprüche 1 bis 3, **dadurch gekennzeichnet, dass** der Stützsteg (11) und die zugeordnete Eingriffrille (4) umlaufend ausgebildet sind.

5. Gelenklager nach einem der Ansprüche 1 bis 3, **dadurch gekennzeichnet, dass** der Stützsteg (11) und die zugeordnete Eingriffrille (4) in Umfangsteilbereichen ausgebildet sind.

6. Gelenklager nach einem der Ansprüche 1 bis 5, **dadurch gekennzeichnet, dass** der Stützsteg (11) gegenüberliegend zum Längsschlitz (8) eine Unterbrechung (12) aufweist, so dass das Kunststoffrohr (7) in diesem Längsbereich scharnierartig aufklappbar ist.

7. Gelenklager nach Anspruch 6, **dadurch gekennzeichnet, dass** die Unterbrechung (12) V-förmig ausgebildet ist und/oder die Stützstegenden bei aneinanderliegenden Schlitzrändern (9, 10) eine V-Form bilden.

8. Gelenklager nach einem der Ansprüche 1 bis 7, **dadurch gekennzeichnet, dass** die Anlageflächen der Schlitzränder (9, 10) des Kunststoffrohrs (7) eine gegenseitige Eingriffstruktur (14a, 14b) aufweisen und/oder im Vergleich zur Wandstärke des Kunststoffrohrs (7) breitere Anlageflächenbereiche ausgebildet sind.

9. Gelenklager nach einem der Ansprüche 1 bis 8, **dadurch gekennzeichnet,**
- **dass** an beiden Endseiten des Stahlrohrs (2) vorzugsweise im noch nicht in das Aufnahmeauge (24) eingepressten Zustand der Gelenkbuchse (15), Stützringe (16, 17) aufgesteckt sind mit jeweils einem axialen Freiraum (18, 19) zur jeweils benachbarten Stirnseite der Gummischicht (3), und
- **dass** nach dem Einpressen der Gelenkbuchse (15) in das Aufnahmeauge (24) der Gummi der Gummischicht (3) in die beidseitigen Freiräume (18, 19) so verdrängt ist, dass eine Anlage und axiale Abstützung zwischen Gummischicht (3) und Stützringen (16, 17) erfolgt.

10. Gelenklager nach Anspruch 9, **dadurch gekennzeichnet, dass** die radiale Materialstärke der Stützringe (16, 17) etwas geringer als die Gummischichtdicke ist und das Kunststoffrohr (7) mit axialen, stirnseitigen Überständen und radialen Spalten (20, 21) die Stützringe (16, 17) jeweils übergreift.

11. Gelenklager nach Anspruch 9, **dadurch gekennzeichnet, dass** die radiale Materialstärke der Stützringe (16, 17) etwa der Gummischichtdicke entspricht und dass die Kunststoffrohrlänge etwa der Gummischichtlänge entspricht, wobei die Kunststoffrohrinnenwand jeweils im Endbereich schräg nach radial innen verläuft.

12. Gelenklager nach einem der Ansprüche 1 bis 11, d**adurch gekennzeichnet, dass** das Kunststoffrohr (7) ein glasfaserverstärktes Polyamidrohr ist.

13. Gelenklager nach einem der Ansprüche 1 bis 12, **dadurch gekennzeichnet, dass** das erste Lagerteil weiter zwei beabstandete Halteplatten (25, 26), insbesondere als Bauteile eines Federgehänges einer Blattfederlagerung eines Nutzfahrzeuges umfasst, zwischen die das innere Stahlrohr (2) mittels des Befestigungsbolzens (27) einer Schraubverbindung verdrehfest eingespannt ist, wobei die axiale Länge des Stahlrohrs (2) größer als die axiale Länge des Aufnahmeauges (24) ist.

14. Gelenklager nach einem der Ansprüche 1 bis 13, **dadurch gekennzeichnet, dass** das Aufnahmeauge ein zylindrisch ausgedrehtes oder unbearbeitetes Federauge (24) ist.

## Claims

1. Pivot bearing (23), in particular spring-eye bearing,
- with a cylindrical pivot bushing (15) which comprises a radially inner, stable, thick-walled steel pipe (2), a cylindrical rubber layer (3) and an outer pipe part in the form of a plastic pipe (7),
- with a fastening bolt which is received in the steel pipe (2) and forms a component of a first bearing part,
- with a receiving eye as the second bearing part, in particular a spring eye (24) of a leaf spring, into which the cylindrical pivot bushing (15), which is larger in diameter in the production state, is pressed under radial prestress,
**characterized**
- **in that** the rubber layer (3) is fitted in a firmly adhering manner, preferably vulcanized, on the outer surface of the steel pipe (2), with the steel pipe (2) and the rubber layer (3) forming a bushing part (1),
- **in that** the plastic pipe (7) has a longitudinal slot (8) which is continuous over its length and has mutually opposite slot edges (9, 10), with, in the production state, the outside diameter of the plastic pipe (7), with slot edges (9, 10) bearing against each other and closed longitudinal slot (8), being larger than the inside diameter of the receiving eye (24),
- **in that** the plastic pipe (7) has at least one supporting web (11) arranged in a transverse plane of the bearing and directed towards the inside of the pipe, and, correspondingly, the rubber layer (3), on its outside, has an engagement groove (4) assigned to the supporting web (11),
- **in that** the plastic pipe (7) is placed from the side, by means of elastic expansion of the longitudinal slot (8), onto the bushing part (1) to complete the pivot bushing (15), the supporting web (11) engaging in the engagement groove (4),
- **in that** the pivot bushing (15) is pressed into the receiving eye (24), so that, on the one hand, by means of a radial and axial displacement of rubber in the rubber layer (3), a radially outwardly directed prestress acting in the rubber layer and on the outer plastic pipe (7) is built up,
- so that, on the other hand, the longitudinal slot (8) is closed and, with appropriate dimensioning of the width of the longitudinal slot (8), its slot edges (9, 10) bear against each other under prestress, which, in addition to the radial prestress supplied by the prestressed rubber layer, increases the radial prestress of the plastic pipe (7) and therefore the contact-pressure force thereof against the inner surface of the receiving eye in such a manner that the plastic pipe (7) is held in the receiving eye (24) with a torsion-proof contact connection, and that, by contrast, by means of the prestress in the rubber layer (3), the latter is held in a rotationally fixed manner in the plastic pipe (7) by means of a frictional connection under normally provided operating conditions up to a certain initial breakaway torque and bearing movements are absorbed molecularly in the rubber layer (3) but, if there is a large rotational loading (29) via the initial breakaway torque, the rubber layer (3) slips relative to the plastic pipe (7) into a position which is subjected to a smaller amount of load but is again held there in a rotationally fixed manner, in order to dissipate this large rotational loading, and
- so that, as a result of the axial displacement of rubber, the supporting web (11) which engages in the engagement groove (4) is held with a contact connection on both sides in the engagement groove (4) as a means of securing the axial position for the rubber layer (3) in relation to the plastic pipe (7).

2. Pivot bearing according to Claim 1, **characterized in that** the supporting web (11) and therefore the associated engagement groove (4) are arranged in a longitudinal centre of the bearing.

3. Pivot bearing according to Claim 1 or 2, **characterized**
- **in that,** in the production state, the depth of the engagement groove and the width of the engagement groove are larger than the height of the web and the width of the web, and
- **in that,** for preassembly of the plastic pipe (7) on the rubber layer (3) in a correct axial position, adjustment lugs (5) protruding radially into the web region are integrally formed in the engagement groove (4), with a respective adjustment notch (6) matched to the width of the web.

4. Pivot bearing according to one of Claims 1 to 3, **characterized in that** the supporting web (11) and the associated engagement groove (4) are formed in an encircling manner.

5. Pivot bearing according to one of Claims 1 to 3, **characterized in that** the supporting web (11) and the associated engagement groove (4) are formed in partial regions of the circumference.

6. Pivot bearing according to one of Claims 1 to 5, **characterized in that** the supporting web (11) has an interruption (12) opposite the longitudinal slot (8), so that the plastic pipe (7) can be swung up in the manner of a hinge in this longitudinal region.

7. Pivot bearing according to Claim 6, **characterized in that** the interruption (12) is formed in a V-shaped manner and/or the supporting-web ends, with slot edges (9, 10) bearing against each other, form a V-shape.

8. Pivot bearing according to one of Claims 1 to 7, **characterized in that** the contact surfaces of the slot edges (9, 10) of the plastic pipe (7) have a mutual engagement structure (14a, 14b) and/or wider contact surface regions are formed in comparison to the wall thickness of the plastic pipe (7).

9. Pivot bearing according to one of Claims 1 to 8, **characterized**
- **in that** supporting rings (16, 17) are plugged onto both end sides of the steel pipe (2), preferably with the pivot bushing (15) not yet pressed into the receiving eye (24), with an axial clearance (18, 19) in each case with respect to the respectively adjacent end side of the rubber layer (3), and
- **in that,** after the pivot bushing (15) is pressed into the receiving eye (24), the rubber of the rubber layer (3) is displaced into the clearances (18, 19) on both sides in such a manner that contact and axial support take place between rubber layer (3) and supporting rings (16, 17).

10. Pivot bearing according to Claim 9, **characterized in that** the radial material thickness of the supporting rings (16, 17) is somewhat smaller than the thickness of the rubber layer, and the plastic pipe (7) engages over the supporting rings (16, 17) in each case by means of axial projecting lengths on the end sides and radial gaps (20, 21).

11. Pivot bearing according to Claim 9, **characterized in that** the radial material thickness of the supporting rings (16, 17) approximately corresponds to the thickness of the rubber layer, and **in that** the length of the plastic pipe approximately corresponds to the length of the rubber layer, the inner wall of the plastic pipe in each case running obliquely radially inwards in the end region.

12. Pivot bearing according to one of Claims 1 to 11, **characterized in that** the plastic pipe (7) is a glass-fibre-reinforced polyamide pipe.

13. Pivot bearing according to one of Claims 1 to 12, **characterized in that** the first bearing part furthermore comprises two spaced-apart retaining plates (25, 26), in particular as components of a spring shackle of a leaf-spring mounting of a commercial vehicle, between which the inner steel pipe (2) is clamped in a torsion-proof manner by means of the fastening bolt (27) of a screw connection, with the axial length of the steel pipe (2) being larger than the axial length of the receiving eye (24).

14. Pivot bearing according to one of Claims 1 to 13, **characterized in that** the receiving eye is a spring eye (24) which is hollowed out cylindrically by turning or is unmachined.

## Revendications

1. Palier de pivotement (23), en particulier palier d'oeillet de ressort,
- avec une douille articulée cylindrique (15), qui comprend un tube d'acier (2) intérieur, stable et à paroi épaisse, une couche en caoutchouc cylindrique (3) et une partie tubulaire extérieure sous forme de tube en plastique (7),
- avec un boulon de fixation qui est logé dans le tube d'acier (2) et forme un élément d'une première partie du palier,
- avec un oeillet de logement en tant que deuxième partie de palier, en particulier un oeillet de ressort (24) d'un ressort à lame, dans lequel la douille articulée cylindrique (15) au diamètre supérieur à l'état de fabrication est emmanchée sous précontrainte radiale,
**caractérisé en ce que**
- la couche en caoutchouc (3) est appliquée, de préférence fixée par vulcanisation, sur la surface extérieure du tube d'acier (2) de manière à adhérer, le tube d'acier (2) et la couche en caoutchouc (3) formant une partie de la douille (1),
- le tube en plastique (7) présente une échancrure longitudinale continue (8) s'étendant sur sa longueur avec des bords d'échancrure (9, 10) opposés l'un à l'autre, le diamètre extérieur du tube en plastique (7) avec des bords d' échancrure (9, 10) l'un contre l'autre et une échancrure longitudinale (8) fermée étant supérieur au diamètre intérieur de l'oeillet de logement (24) à l'état de fabrication,
- le tube en plastique (7) présente au moins une entretoise (11) disposée dans un plan transversal du palier et tournée vers le côté intérieur du tube et la couche en caoutchouc (3) sur son côté extérieur une rainure de contact (4) affectée à l'entretoise (11),
- le tube en plastique (7) est monté sur la partie de douille (1) pour compléter la douille articulée (15) par l'élargissement élastique de l'échancrure longitudinale (8) par le côté, l'entretoise (11) intervenant dans la rainure de contact (4),
- la douille articulée (15) est emmanchée dans l'oeillet de logement (24), si bien que d'une part, en raison d'un déplacement radial et axial du caoutchouc dans la couche de caoutchouc (3), une précontrainte agissant dans cette couche et sur le tube en plastique (7) extérieur et tournée radialement vers l'extérieur est établie,
- si bien que d'autre part, l'échancrure longitudinale (8) est fermée et qu'avec le dimensionnement en largeur correspondant de l'échancrure longitudinale (8), ses bords d'échancrure (9, 10) sont l'un contre l'autre sous précontrainte, ce qui augmente la précontrainte radiale du tube en plastique (7) en plus de la précontrainte radiale fournie par la couche en caoutchouc précontrainte et par conséquent sa force d'appui contre la surface intérieure de l'oeillet de logement, si bien que le tube en plastique (7) est maintenu dans l'oeillet de logement (24) par un assemblage résistant à la torsion et que, en raison de la précontrainte dans la couche en caoutchouc (3), celle-ci est par contre solidement maintenue dans le tube en plastique (7) par entraînement par friction dans des conditions de service normales jusqu'à un certain couple initial de décollement, et que les mouvements de palier sont absorbés dans la couche en caoutchouc (3) moléculairement, mais qu'en cas de grande charge rotative (29) supérieure au couple initial de décollement, la couche en caoutchouc (3) glisse par rapport au tube en plastique (7) dans une position moins chargée, mais où elle est à nouveau maintenue solidement, de manière à supprimer cette charge rotative élevée, et
- si bien que à la suite du déplacement axial du caoutchouc, l'entretoise (11) intervenant dans la rainure de contact (4) est maintenue avec un assemblage par contact mutuel dans la rainure de contact (4) pour former un blocage en position axiale pour la couche en caoutchouc (3) par rapport au tube en plastique (7).

2. Palier de pivotement selon la revendication 1, **caractérisé en ce que** l'entretoise (11) et par conséquent la rainure de contact (4) affectée sont disposées dans un centre longitudinal du palier.

3. Palier de pivotement selon la revendication 1 ou 2, **caractérisé en ce que**
- à l'état de fabrication, la profondeur et la largeur de la rainure de contact sont supérieures à la hauteur et à la largeur de l'entretoise, et
- pour un prémontage en bonne position axiale du tube en plastique (7) sur la couche en caoutchouc (3), des nez d'ajustement (5) faisant saillie radialement dans la zone de l'entretoise sont formés dans la rainure de contact (4), avec à chaque fois une encoche d'ajustement (6) adaptée à la largeur de l'entretoise.

4. Palier de pivotement selon l'une quelconque des revendications 1 à 3, **caractérisé en ce que** l'entretoise (11) et la rainure de contact (4) affectée sont conçues de façon circulaire.

5. Palier de pivotement selon l'une quelconque des revendications 1 à 3, **caractérisé en ce que** l'entretoise (11) et la rainure de contact (4) affectée sont conçues dans des zones partielles du contour.

6. Palier de pivotement selon l'une quelconque des revendications 1 à 5, **caractérisé en ce que** l'entretoise (11) présente un vide (12) à l'opposé de l'échancrure longitudinale (8), si bien que le tube en plastique (7) peut être relevé dans cette zone longitudinale de façon comparable à une charnière.

7. Palier de pivotement selon la revendication 6, **caractérisé en ce que** le vide (12) est en forme de V et/ou les extrémités de l'entretoise présentent une forme en V lorsque les bords d'échancrure (9, 10) sont l'un contre l'autre.

8. Palier de pivotement selon l'une quelconque des revendications 1 à 7, **caractérisé en ce que** les surfaces d'appui des bords d'échancrure (9, 10) du tube en plastique (7) présentent une structure de contact réciproque (14a, 14b) et/ou, comparativement à l'épaisseur de paroi du tube en plastique (7), des zones de surface d'appui plus larges sont conçues.

9. Palier de pivotement selon l'une quelconque des revendications 1 à 8, **caractérisé en ce que**
- aux deux extrémités du tube d'acier (2), de préférence à l'état de la douille articulée (15) encore non emmanchée dans l'oeillet de logement (24), sont fixées des bagues d'appui (16, 17) avec à chaque fois un espace libre axial (18, 19) par rapport chaque fois à la face frontale adjacente de la couche en caoutchouc (3), et
- après l'emmanchement de la douille articulée (15) dans l'oeillet de logement (24), le caoutchouc de la couche en caoutchouc (3) est déplacé de telle sorte dans les espaces libres (18, 19) bilatéraux qu'un contact et un soutien axial entre la couche en caoutchouc (3) et les bagues d'appui (16, 17) ont lieu.

10. Palier de pivotement selon la revendication 9, **caractérisé en ce que** l'épaisseur de matière radiale des bagues d'appui (16, 17) est un peu plus petite que l'épaisseur de la couche en caoutchouc et le tube en plastique (7) recouvre chacune des bagues d'appui (16, 17) avec des saillies frontales axiales et des intervalles radiaux (20, 21).

11. Palier de pivotement selon la revendication 9, **caractérisé en ce que** l'épaisseur de matière radiale des bagues d'appui (16, 17) correspond approximativement à l'épaisseur de la couche en caoutchouc et **en ce que** la longueur du tube en plastique correspond approximativement à la longueur de la couche en caoutchouc, la paroi intérieure du tube en plastique s'étendant à chaque fois radialement vers l'intérieur et de façon inclinée au niveau de l'extrémité.

12. Palier de pivotement selon l'une quelconque des revendications 1 à 11, **caractérisé en ce que** le tube en plastique (7) est un tube en polyamide renforcé de fibres de verre.

13. Palier de pivotement selon l'une quelconque des revendications 1 à 12, **caractérisé en ce que** la première partie de palier comprend également deux plaques de maintien (25, 26) éloignées l'une de l'autre, en particulier faisant office de composants d'une chandelle de suspension du ressort d'un palier à ressort à lames d'un véhicule utilitaire, entre lesquelles le tube d'acier intérieur (2) est serré à l'aide du boulon de fixation (27) d'un raccord vissé de manière à résister à toute torsion, la longueur axiale du tube d'acier (2) étant supérieure à la longueur axiale de l'oeillet de logement (24).

14. Palier de pivotement selon l'une quelconque des revendications 1 à 13, **caractérisé en ce que** l'oeillet de logement est un oeillet de ressort (24) alésé cylindriquement ou à l'état brut.
